# EUROPEAN PATENT APPLICATION

(11) **EP 4 847 643 A1**
(43) Date of publication of application: **02.12.2026**
(21) Application number: 24159771.5
(22) Date of filing: 26.02.2024
(51) Int. Cl.: C22B 3/08, B01D 9/00, C07C 51/43, C22B 3/12, C22B 3/44, C22B 7/00, C22B 3/00, C22B 26/12, C22B 47/00, H01M 10/54

(54) **DUAL CRYSTALLIZATION PROCESS**

(71) Applicant: Northvolt Revolt AB, 112 47 Stockholm (SE)
(72) Inventor: Alemrajabi, Mahmood, 170 67 Solna (SE); Jensen, Robert, 723 58 Västerås (SE); María Burgos Parra, Andrea, 172 35 Sundbyberg (SE); Gracia Tabuenca, Alejandro, 723 58 Västerås (SE); Anaya Garzon, Juan David, 723 58 Västerås (SE); Vieceli, Nathalia, 723 59 Västerås (SE); Sadegh Vaziri, Ramiar, 120 78 Stockholm (SE)

(57) **Abstract**

The present disclosure relates to a process for recovering metal from an aqueous solution, which comprises at least one of Ni and Co, and optionally Mn, dissolved therein, the process comprising a first and a second crystallization stage.

## Description

### TECHNICAL FIELD

The present disclosure relates to a process for recovering metals from an aqueous solution which comprises dissolved therein at least one of Ni and Co, and optionally Mn, the process comprising a first and a second crystallization stage.

### BACKGROUND

Recovery of metals from feedstocks containing nickel (Ni), cobalt (Co) and/or manganese (Mn) originated, for example, from waste batteries, mixed hydroxide precipitates, ores and by-products from mining, will become critically important considering the increasing demand for such valuable materials, in particular to achieve economical and environmentally friendly production of batteries for, for example, electric vehicles on the one side and the scarcity of resources on the other side. Batteries can be based on various technologies, for example the nickel-cadmium (NiCd) or the nickel metal hydride (NiMH) technology. In the transportation sector, secondary (rechargeable) lithium-ion batteries (LIBs) have become the most popular power source. In LIBs, lithium composite oxides including lithium and one or more of transition metals nickel, cobalt and manganese (so-called "NCM metals") are typically used as active materials of the cathode (i.e., cathode or positive electrode active materials) and, therefore, are the metals of main interest for recovery.

The recovery of valuable metals from such feedstocks often results in the provision of an aqueous solution comprising these metals dissolved as soluble metal salts, since from the viewpoint of energy consumption and cost efficiency subjecting the solid feedstock to a wet chemical process such as leaching is preferable over pyrometallurgical processes. Such hydrometallurgical process employs multi-step treatments, and involves the use of a so-called "leach solution", usually an acid or acidic solution like sulfuric acid, to extract metal(s) from a metal-bearing feedstock, and will furnish the metals as acidic aqueous solutions of their salts (so-called "pregnant" leach solution or "leachate"), for example as sulfates, which are then recovered from the pregnant leach solution by crystallization and precipitation. In current recovery processes of NCM metals, the main product obtained from crystallization is a mixture or blend of nickel, cobalt and manganese salts that crystallize in a single crystallization stage (i.e. a one-step crystallization).

Considering the above, there is a need for an optimized process for recovering materials, such as valuable metals nickel, cobalt and manganese, from an aqueous solution, which allows for broadening the number of products that can be obtained in the process based on their required specification, and for processing a great variety of feed materials, such as feedstocks rich in nickel and/or cobalt, and optionally with high content in manganese, while increasing the recovery rate for nickel, cobalt and manganese and at the same time reducing the consumption of chemicals and undesired by-products.

### SUMMARY

In view of the above-outlined need, it is an object of the present disclosure to provide a process which allows to recover metal materials, in particular Ni, Co and Mn, from an aqueous solution with high recovery rates, and which is cost effective and has reduced consumption of chemicals and energy.

Further, it is an object of the present disclosure to provide a process for recovering metal materials from an aqueous solution, in particular Ni, Co and Mn, which makes it possible to recover mainly Ni and Co separately from Mn, and in high purity, and to obtain different Ni-enriched purified materials.

Further, it is an object of the present disclosure to provide a process for recovering metal materials, in particular Ni, Co and Mn, from an aqueous solution, which allows to obtain a broad number of possible products based on the desired specification of the products, and which is not limited in the kind of feed material, but allows for implementing a great variety of feedstocks independent of quality and content of metals, in particular of Ni, Co and Mn.

Further, it is an object of the present disclosure to provide a process which allows to efficiently recover Ni, Co and Mn from an aqueous solution to facilitate subsequent recovery of Li, and which process is capable of being integrated in the recycling of batteries and in battery active material precursor synthesis.

One or more of the above-outlined objects may be solved by a process for recovering metal materials from an aqueous solution according to independent claims 1 and 17. Independent claim 1 and the claims depending on claim 1 can be combined in any technologically suitable and sensible way, providing further embodiments of the invention.

Specifically disclosed herein is a process for recovering metal materials from an aqueous solution, said aqueous solution being preferably obtained by subjecting a feedstock to a wet chemical process, such as acid leaching, wherein the aqueous solution comprises at least one of Ni and Co, and optionally Mn, dissolved therein, and wherein the process comprises:
- a first crystallization stage comprising crystallizing the aqueous solution at a temperature of 20 °C or more to form a first Ni and/or Co crystallization product and a first supernatant solution, and isolating the first Ni and/or Co crystallization product from the first supernatant solution; and
- a second crystallization stage comprising cooling the first supernatant solution to a temperature of less than 20 °C for crystallization, to form a second Ni and/or Co crystallization product, which is different from the first Ni and/or Co crystallization product, and a second supernatant solution, and isolating the second Ni and/or Co crystallization product from the second supernatant solution.

Further disclosed herein is a method for the recycling of lithium ion secondary batteries, in particular to produce a positive electrode material for a lithium ion secondary battery, the method comprising the process for recovering metal materials from an aqueous solution disclosed herein.

The present inventors have found that the process for recovering metal from an aqueous solution disclosed herein, which comprises at least the first and second crystallization stages according to the present disclosure, advantageously makes it possible to achieve one or more of the following objects: To optimize the crystallization process such that a variety of different products can be obtained depending on the desired specifications of the product, and to allow recovery of Ni and Co as crystallization products of high purity even in the presence of Mn and to obtain different Ni-enriched purified products; to process a great variety of metal-bearing feed materials and feedstocks for providing the aqueous solutions, independent of their quality, and which may be rich in Ni and/or Co or may have a high content of Mn; and to recover Ni, Co and Mn from an aqueous solution in high recovery rates without requiring special chemicals and complex treatment, said aqueous solution may be obtained from a simple wet chemical process using a feedstock that may result from a mechanical pre-treatment of lithium-ion batteries, and therefore the process advantageously may be integrated in a process of recycling of batteries, in particular in battery active material precursor synthesis.

### DESCRIPTION OF THE DRAWINGS

Different aspects are now described with reference to the accompanying drawings. Apparently, the accompanying drawings in the following description show merely some embodiments of this application, and a person of ordinary skill in the art may still derive other drawings and embodiments from these accompanying drawings without creative efforts.

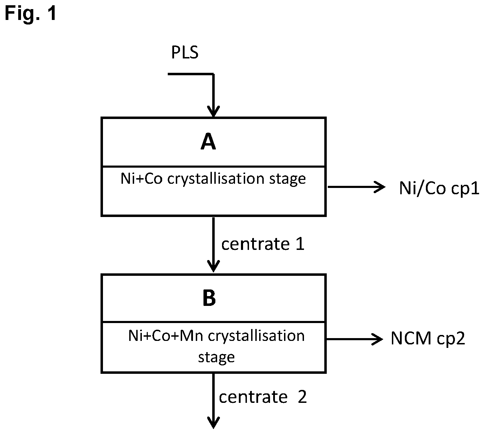

Fig. 1 is a schematic flowchart illustrating an embodiment of the process for recovering metal materials from an aqueous solution according to the present disclosure.

For the sake of simplicity, it is assumed in the following that the aqueous solution is a pregnant leach solution (PLS) containing Ni, Co and Mn dissolved in sulfuric acid medium as sulfate salts, which may be obtained from liquid phase acid leaching of black mass using sulfuric acid as the leaching agent, but the process is not limited thereto.

With reference to Fig. 1, the PLS is first subjected to a first crystallization stage (A), in which a crystallization temperature of the PLS is set to more than 20 °C for crystallization. The conditions and parameters of the first crystallization stage (A), in particular the crystallization temperature, are selected to crystallize a NiSO₄/CoSO₄ product as a first crystallization product (Ni/Co cp1) based on their differences in solubility limits compared to MnSO₄. For isolating the first crystallization product (Ni/Co cp1), the crystallized NiSO₄/CoSO₄ product is then separated from the supernatant acid solution (centrate 1) remaining as the liquid phase, for example by centrifugation or filtration, and is optionally washed for purification.

The supernatant solution (centrate 1) is then subjected to a second crystallization stage (B), in which it is cooled down to a crystallization temperature of less than 20 °C, to decrease the solubility limits of NiSO₄, CoSO₄ and MnSO₄ in the solution in order initiate and promote crystal formation. The conditions and parameters of the second crystallization stage (B), in particular the cooling/crystallization temperature, are selected to crystallize a NiSO₄/CoSO₄/MnSO₄ product of desired specification and composition as a second crystallization product (NCM cp2). For isolating the second crystallization product (NCM cp2), the crystallized NiSO₄/CoSO₄/MnSO₄ product is then separated from the supernatant acid solution (centrate 2) remaining as the liquid phase, for example by centrifugation or filtration, and optionally washed for purification. The supernatant acid solution (centrate 2) may be subjected to further recovery treatment(s).

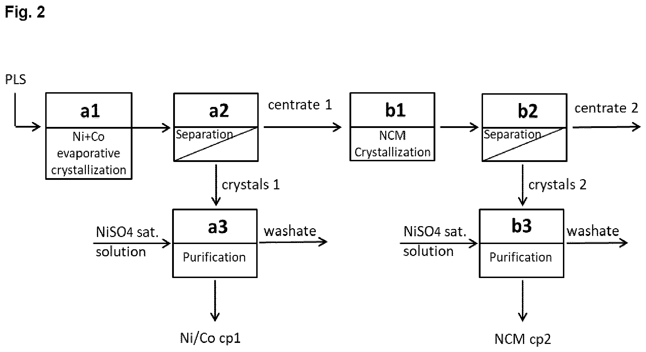

Fig. 2 is a schematic flowchart illustrating in more detail an embodiment of a process for recovering metal materials from the aqueous solution of Fig. 1.

With reference to Fig. 2, in the first crystallization stage (a1-a3), the pregnant leach solution (PLS) containing Ni, Co and Mn dissolved in sulfuric acid solution as their sulfate salts is first introduced to crystallization unit (a1) for evaporative crystallizing the PLS at a controlled temperature of 20° or more, particularly preferably 30°C to 50°C, in order to reduce the volume of the PLS by evaporation to selectively reach the saturation points for Ni and Co, and to initiate and promote crystal formation from the PLS. NiSO₄ and CoSO₄ are selectively crystallized from MnSO₄ due to differences in solubility limits to form a NiSO₄/CoSO₄ crystallization product, which is then separated in a separation unit (a2), for example by centrifugation or filtration, leaving behind a supernatant acid solution (centrate 1) remaining as the liquid phase. The separated NiSO₄/CoSO₄ crystallization product (crystals 1) is then subjected to a purification unit (a3), in which it is mixed with a saturated NiSO₄ solution for 1 h to 24 h and at a solid-to liquid ratio (S/L) of, for example, 1:5. Finally, after separation for example by centrifugation or filtration, a purified NiSO₄/CoSO₄ crystallization product (Ni/Co cp1) can be isolated as the first crystallization product.

The supernatant acid solution (centrate 1) is the subjected to a second crystallization stage (b1-b3), in which it is first introduced to a crystallization unit (b1) and cooled below 20°C, preferably to 0 °C to 5°C, to decrease the solubility limits of NiSO₄, CoSO₄ and MnSO₄ in the solution in order initiate and promote crystal formation from the supernatant acid solution (centrate 1). NiSO₄, CoSO₄ and MnSO₄ are crystallized from the supernatant acid solution (centrate 1), and the formed NiSO₄/CoSO₄/MnSO₄ crystallization product is then separated in a separation unit (b2), for example by centrifugation or filtration, leaving behind a supernatant acid solution (centrate 2) remaining as the liquid phase. The separated crystallization product (crystals 2) is then subjected to a purification unit (b3), in which it is mixed with a saturated NiSO₄ solution for 1 h to 24 h and at a solid-to liquid ratio (S/L) of 1:5. Finally, after separation for example by centrifugation or filtration, a purified NiSO₄/CoSO₄/MnSO₄ crystallization product (NCM cp2) can be isolated as the second crystallization product.

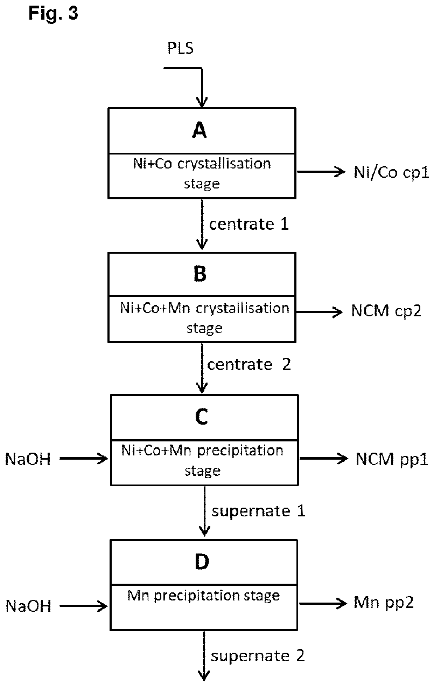

Fig. 3 is a schematic flowchart illustrating another embodiment of the process for recovering metal materials from an aqueous solution according to the present disclosure, which includes the process described with reference to Fig. 1, but additionally contains first and second precipitation stages (C) and (D).

The first and second crystallization stages (A) and (B) in Fig. 3 are as described above with respect to Fig. 1. Considering that the supernatant acid solution (centrate 2) obtained from the second crystallization stage (B) still contains residual amounts of not crystallized Ni, Co and Mn, the supernatant acid solution (centrate 2) is subsequently subjected to a first precipitation stage (C), in which the pH of the solution is raised to a predetermined value through addition of an appropriate amount of NaOH as the hydroxide source, to thereby induce precipitation of hydroxides of Ni, Co and Mn, such as Ni(OH)₂, Co(OH)₂ and Mn(OH)₂. The amount of NaOH added depends on the manganese that is required to be precipitated from the solution, but the pH is preferably raised to a maximum of 8.0 to precipitate at least a majority of the remaining Ni and Co and part of Mn contained in the solution. The formed hydroxides of Ni, Co and Mn mainly precipitate as a coprecipitation product (NCM pp1), which is then separated for example by centrifugation or filtration to leave behind a first supernate (supernate 1) as the liquid phase, which may still contain a portion of Mn that remains dissolved in solution together with sodium (Na) introduced through addition of NaOH. A final concentration of Ni of <500 ppm and of Co of <500 ppm in the first supernate (supernate 1) can be achieved through addition of an appropriate amount of the hydroxide source.

The first supernate (supernate 1) is then subjected to a second precipitation stage (D), in which the pH of the solution is further raised to a value of more than 8.0 through addition of an appropriate amount of NaOH, to thereby induce precipitation of the remaining portion of Ni, Co, and Mn as a hydroxide, such as Ni(OH)₂, Co(OH)₂ and Mn(OH)₂. The formed Mn-enriched precipitation product (Mn pp2) is then separated for example by centrifugation or filtration to leave behind a second supernate (supernate 2) as the liquid phase, which still contains the Na dissolved therein. A final concentration of Mn of 800 ppm in the second supernate (supernate 2) can be achieved through addition of an appropriate amount of hydroxide source.

The second supernate (supernate 2) may subsequently be further processed, for example subjected to further precipitation stage(s) for recovering Na.

### DETAILED DESCRIPTION

The technical solutions of the embodiments of this application will be described in more detail below with reference to the accompanying drawing. It is obvious that the embodiments to be described are a part rather than all of the embodiments of this application. The features of various embodiments can be combined to form further exemplary aspects of the present disclosure that may not be explicitly described or illustrated. All other embodiments obtained by persons of ordinary skill in the art based on the embodiments of the present invention without making creative efforts shall fall within the protection scope of the present invention. Further it is to be understood that the words and terms employed herein are used for describing specific embodiments only, and is not intended to be limiting, since the scope of the present invention is defined by the appended claims and equivalents thereof.

The present disclosure provides for a process for recovering metal materials from an aqueous solution, said aqueous solution being preferably obtained by subjecting a feedstock to a wet chemical process, wherein the aqueous solution comprises at least one of Ni and Co, and optionally Mn, dissolved therein, and wherein the process comprises:
- a first crystallization stage comprising crystallizing the aqueous solution at a temperature of 20 °C or more to form a first Ni and/or Co crystallization product and a first supernatant solution, and isolating the first Ni and/or Co crystallization product from the first supernatant solution; and
- a second crystallization stage comprising cooling the first supernatant solution to a temperature of less than 20 °C for crystallization, to form a second Ni and/or Co crystallization product, which is different from the first Ni and/or Co crystallization product, and a second supernatant solution, and isolating the second Ni and/or Co crystallization product from the second supernatant solution.

The aqueous solution subjected to crystallization according to the process of the present disclosure, respectively its origin and metal constituents, is not particularly limited, as long as it comprises at least one of Ni and Co, and optionally Mn, as soluble metal salts. For example, the aqueous solution may be the product or result of a wet chemical process such as a hydrometallurgical process for extracting metals from a metal-bearing, solid feedstock to furnish the metals as an aqueous solution of their salts. In this case, the aqueous solution represents the so-called "pregnant leach solution (PLS)", and is usually an acidic solution with pH below 7.0 resulting from an acid leaching process. But the aqueous solution comprising at least one of Ni and Co, and optionally Mn, dissolved therein is not limited thereto, but may have a pH of up to 7.5, and may also be of another origin, for example, be prepared as a synthetic solution. In a preferred embodiment, the present disclosure provides for a process for recovering materials from an aqueous solution which is an acidic solution obtained by subjecting a feedstock to a wet chemical process, such as acid leaching. Further preferably according to the present disclosure, the aqueous solution or acidic solution comprises dissolved therein Ni and Co, and optionally Mn, more preferably at least two of Ni, Co and Mn, and still more preferably Ni, Co and Mn. Further preferably according to the present disclosure, Ni is the main metal constituent dissolved in the aqueous solution.

The feedstock that may be subjected to a wet chemical process for obtaining the aqueous solution according to this embodiment of the present disclosure is not particularly limited, in particular regarding its origin and metal constituents, as long as it comprises at least one of Ni and Co, and optionally Mn, which can be extracted therefrom via a wet chemical process to provide an aqueous solution with the metals dissolved therein. Preferably according to this embodiment, the feedstock comprises at least one of Ni and Co, and optionally Mn, more preferably comprises at least two of Ni, Co and Mn, and still more preferably comprises Ni, Co and Mn. Further preferably according to this embodiment, the feedstock comprises Ni as the main metal constituent.

In a further preferred embodiment of the present disclosure, the feedstock is a metal-bearing, solid feedstock, which may be selected from recycled or residual materials feedstocks and metal-based raw material feedstocks, and combinations thereof. Preferred examples of recycled or residual materials feedstocks include, without being limited thereto, materials derived from recycled or crushed lithium-ion batteries, in particular lithium-ion batteries employing lithium transition metal composite oxides as the cathode active material, and in particular so-called "NCM-based" lithium-ion batteries, or lithium-ion battery manufacturing scrap, in particular NCM-based lithium-ion battery manufacturing scrap, or a combination thereof, which material is collectively referred to herein as "black mass". Preferred examples of raw material feedstocks include, without being limited thereto, metal-containing concentrates, such as nickel sulfide concentrate or cobalt sulfide concentrate; mixed hydroxide precipitates (MHPs), such as mixed nickel hydroxide precipitates (Ni-based MHPs) and mixed cobalt hydroxide precipitates (Co-based MHPs), or combinations thereof like mixed nickel-cobalt hydroxide precipitates; mixed sulfide precipitates (MSPs), such as mixed nickel sulfide precipitates (Ni-based MSPs) and mixed cobalt sulfide precipitates (Co-based MSPs), or combinations thereof; ores, mattes such as nickel matte; nickel laterite; ferronickel; or any combination thereof. However, as mentioned above, the feedstock for obtaining the aqueous solution comprising soluble metal salts of at least one of Ni and Co, and optionally Mn, according to another embodiment of the present disclosure may also be obtained from other sources.

Within the framework of this application, the term "battery" is intended to include a battery cell, a battery module, which typically contains a plurality of battery cells, and a battery pack, which typically contains a plurality of battery modules. Further, within the framework of this application, the term "battery" is intended to include both disposable and rechargeable (also referred to as "secondary") batteries.

The crushing of batteries is typically a pre-treatment step in the recycling of batteries in order to recover valuable battery materials included therein, in particular the cathode materials. Recycling of batteries usually starts by sorting waste or spent batteries according to their chemical composition, and then mechanically treating them by crushing or shredding to obtain a size-reduced battery material. A battery comprises various materials, including plastics and metals that make up the battery housing, the separator, the cathode and anode materials, and an electrolyte. After mechanical pre-treatment like crushing, a series of filtering and sieving steps are performed to separate plastic and metal shreds and to finally obtain a refined crushed battery material, the so-called "black mass", as the product, which mainly contains cathode materials and anode materials, but may also contain for example electrolyte materials. However, the composition of black mass typically varies depending on the types of batteries subjected to crushing, because the sorting of the batteries is often difficult or neglected.

The terms "cathode material" and "cathode active material" are used interchangeably to describe the materials or metals which constitute the primary active component of the cathode. In lithium-ion batteries, lithium transition metal composite oxides including active metals nickel (Ni), cobalt (Co) and/or manganese (Mn) (so-called "NCM metals"), or lithium iron phosphate (LiFePO₄), are typically used as the cathode active material. Common examples of lithium transition metal composite oxides are lithium cobalt oxide (LiCoOz), lithium nickel oxide (LiNiOz), lithium nickel cobalt oxide (LiNiₓCo₁₋ₓO₂ (0<x<1) or LiNi_{1-x-y}CoₓAl_{y}O₂ ((0<x≤0.2, 0<y≤0.1)) as well as lithium nickel cobalt manganese (NCM) oxide (LiNi_{1-x-y}CoₓMn_{y}O₂ (0<x+y<1)), without being limited thereto.

The terms "anode material" and "anode active material" are used interchangeably to describe the materials or metals which constitute the primary active component of the anode. Typically, lithium-ion batteries use graphite powder as an anode material. However, as used herein the terms "anode material" and "anode active material" should be understood to also comprise natural and artificial graphite, activated carbon, carbon black, conductive additives, lithium titanate (LTO), silicon, silicon-based materials such as SiOₓ and SiC, and high-performance powdered graphene, without being limited thereto.

The electrolyte of lithium-ion batteries is liquid and typically contains fluoride containing salts such as lithium hexafluorophosphate (LiPF₆), lithium tetrafluoroborate (LiBF₄), lithium trifluoromethanesulfonate (LiCF₃SO₃), lithium bis((bistrifluoromethanesulphonyl) (LiTFSI), or lithium fluoroalkylphosphates dissolved in an organic solvent, for example, mixtures of alkyl carbonates, e.g. C₁-C₆ alkyl carbonates such as ethylene carbonate (EC), ethyl methyl carbonate (EMC), dimethyl carbonate (DMC), diethyl carbonate (DEC), propylene carbonate (PC), without being limited thereto.

Accordingly, black mass obtained from recycled or crushed lithium transition metal composite oxide-based lithium-ion batteries and/or lithium-ion battery manufacturing scrap therefore typically contains Li and one or more of Ni, Co and Mn. For example, black mass obtained from such recycled or crushed lithium-ion batteries may have a composition of about 28-40 wt.% Ni, Co and/or Mn, about 3-5 wt.% lithium (Li), about 30-40 wt.% graphite, about 2-5 wt.% of metallic impurities such as aluminum (Al), copper (Cu), iron (Fe), zirconium (Zr) and/or magnesium (Mg), about 1-2 wt.% organic compounds, about 1 wt.% of other impurities such as calcium (Ca), phosphor (P), silicon (Si), zinc (Zn), potassium (K) and/or sodium (Na), and about 1-2 wt.% fluoride (F), but other components and compositions are also possible.

Particularly preferably, the feedstock comprising at least one of Ni and Co, and optionally Mn, which may be employed for obtaining the aqueous solution according to an embodiment of the present disclosure is selected from recycled or residual battery materials feedstocks, and more preferably comprises a material derived from recycled or crushed lithium ion batteries or lithium ion battery manufacturing scrap, and in particular is black mass. Therefore, the present disclosure in a further preferred embodiment provides for a process for recovering metal materials from an aqueous solution which is obtained by subjecting a feedstock selected from recycled or residual battery materials feedstocks, in particular from lithium ion batteries, to a wet chemical process such as a hydrometallurgical process. More preferably according to this embodiment, the feedstock comprises a material derived from recycled or crushed lithium ion batteries or lithium ion battery manufacturing scrap, and in particular is black mass, and comprises at least one. Further preferably according to this embodiment, such feedstock, and consequently the aqueous solution resulting from the wet chemical process, comprises Ni and Co, and optionally Mn, more preferably comprises at least two of Ni, Co and Mn, and still more preferably comprises Ni, Co and Mn, wherein Ni is preferably the main metal constituent.

Within the framework of the present disclosure, the method and device for crushing or shredding batteries according to embodiments of the present disclosure are not particularly limited, and any methods and devices known to those skilled in the art and commonly employed for crushing or shredding of batteries to provide size-reduced battery materials can be used as desired.

The wet chemical process that may be employed according to an embodiment of the present disclosure is not particularly limited. Any wet chemical process known to a person of ordinary skill in the art can be employed, provided that the process is capable of providing an aqueous solution which comprises at least one of Ni and Co, and optionally Mn, dissolved therein, by extracting the respective metals, as far as present, from a metal-bearing, solid feedstock and to furnish them as an aqueous solution of their salts. For example, the wet chemical process may be a hydrometallurgical process such as leaching, without being limited thereto. Preferably, liquid-phase acid leaching using an acid or acidic solution, in particular an acidic aqueous solution, as the leach solution or leach agent for metal extraction may be employed to provide the aqueous solution, which process preferably results in an acidic solution comprising at least one of Ni and Co, and optionally Mn, dissolved therein.

In a further preferred embodiment, the present disclosure therefore provides for a process for recovering metal materials from an aqueous solution obtained by subjecting a metal-bearing, solid feedstock to a hydrometallurgical process, preferably to liquid-phase acid leaching. In line with the above, the metal-bearing feedstock according to this embodiment, and consequently the aqueous solution resulting from such hydrometallurgical process, comprises at least one of Ni and Co, and optionally Mn, preferably comprises Ni and Co, and optionally Mn, more preferably comprises at least two of Ni, Co and Mn, and still more preferably comprises Ni, Co and Mn, wherein Ni is preferably the main metal constituent. Still further preferably according to this embodiment, the feedstock is selected from recycled or residual battery materials feedstocks, and more preferably comprises a material derived from recycled or crushed lithium ion batteries or lithium ion battery manufacturing scrap, and in particular is black mass.

The conditions for carrying out the wet chemical process, such as a hydrometallurgical process, to provide the aqueous solution according to the embodiments of the present disclosure can be selected by the skilled person as desired. For example, if liquid-phase acid leaching is employed, the acid leaching is preferably carried out at atmospheric pressure (i.e., about 1 bar) using an organic or inorganic acid, preferably sulfuric acid (H₂SO₄), nitric acid (HNO₃), hydrochloric acid (HCl), hydroxylamine hydrochloride or citric acid, as the leaching agent for extracting metals from the feedstock, and more preferably in the presence of a reducing agent such as hydrogen peroxide (H₂O₂). However, the acidic leaching agent and the reducing agent are not limited thereto. The acid may be used as concentrated acid, or as an aqueous or diluted acid, as required. The concentration of the acid may be varied in a wide range, for example 0.1 to 98% by weight, and preferably in a range between 10 and 98% by weight. The acidic solution obtained by such process (also called "leachate") typically has a pH below 1.5, for example below 1, for example about pH 0.7 or 0.5. Through addition of the reducing agent the leaching yield may be enhanced and the metal ions may be transferred to the correct oxidation state, if required. Examples of suitable reducing agents include, without being limited thereto, organic reducing agents such as methanol, ethanol, sugars, ascorbic acid, urea, starch or cellulose, and inorganic reducing agents such as hydrazine and salts thereof, such as the sulfate, and hydrogen peroxide.

A vessel or reactor for carrying out the wet chemical process according to this embodiment of the present disclosure is not particularly limited, as long as it is protected against (strong) acids. A leaching duration may be selected as desired, and for example may be in the range of 10 minutes to 10 hours, preferably 1 to 3 hours.

It is to be understood that if a solid, metal-bearing feedstock is subjected to a wet chemical or hydrometallurgical process like acid leaching to provide the aqueous solution, all kinds of (desired and undesired) metal elements contained in the feedstock besides Ni, Co and Mn are extracted and transferred to solution in the form of dissolved metal salts. Thus, the aqueous solution employed according to the present disclosure, or obtained according to embodiments of the present disclosure as the leachate or pregnant leach solution from leaching of the above-mentioned feedstocks, may comprise dissolved therein - besides at least one of Ni and Co, and optionally Mn - other elements, compounds and/or metals as mentioned above. It primarily depends on the composition and origin of the feedstock(s) employed which of valuable cathode active metals Ni, Co and Mn and which of undesired metals (i.e., metal impurities) is contained in the obtained aqueous solution, and also their respective amounts or concentrations in the obtained aqueous solution depend on the composition and origin of the feedstock(s) employed.

For example, in case the aqueous solution is obtained by subjecting black mass from NCM-based lithium-ion batteries to liquid-phase acidic leaching, the resulting aqueous solution (i.e. the leachate or pregnant leach solution) is an acidic solution that may comprise Li and valuable cathode materials Ni, Co and Mn as the main components, but may additionally comprise one or more of Al, Cu, Fe, Mg, Zn, Ca, Zr and K as metal impurities, without being limited thereto. Since according to this embodiment of the process of the present disclosure the acidic leaching agent is not particularly limited, the type of acid of the resulting acidic solution consequently is also not particularly limited, but can be selected by a skilled person as desired from known organic and inorganic acids. The type of acid of the resulting acidic solution mainly depends on the leaching process and the feedstock(s) employed.

Preferably, in case a hydrometallurgical process like liquid-phase acid leaching is employed, the resulting aqueous, acidic solution comprises one or more of sulfuric acid (H₂SO₄), nitric acid (HNO₃), hydrochloric acid (HCl), hydroxylamine hydrochloride and citric acid, without being limited thereto, because for economic and availability reasons these types of acids are preferably employed as leaching agents in such process for extracting metals from a solid, metal-bearing feedstock, and sulfuric acid is particularly preferred for procedural reasons. In case black mass from lithium-ion batteries is subjected to acid leaching as the feedstock for providing the aqueous solution, the acid leaching is preferably conducted at atmospheric pressure using sulfuric acid as the leaching agent, preferably at a concentration in the range of 2-5 M (molar). The resulting leachate or pregnant leach solution obtained by such acid leaching process typically has a pH below 1.5, for example below 1, for example about pH 0.7 or 0.5.

According to the process of the present disclosure, the aqueous solution comprising at least one of Ni and Co, and optionally Mn, dissolved therein is subjected to a first crystallization stage to isolate and recover a first Ni and/or Co crystallization product from said aqueous solution (also referred to herein as the "initial aqueous solution"), wherein said first crystallization stage comprises crystallizing the aqueous solution at a temperature of 20 °C or more to form a first Ni and/or Co crystallization product and a first supernatant solution which remains as a liquid phase. The term "Ni and/or Co crystallization product" or the like should be understood to mean a crystallization product that comprises Ni, or Co, or a mixture of Ni and Co, as the main metal constituent, depending on the content of Ni and Co in the initial aqueous solution, and moreover does not exclude the presence of small amounts or traces of other metal(s) or metal salt(s) co-crystallized in the first crystallization product.

Since the crystallization temperature has an influence on crystallization selectivity, and thus on the composition of the crystallization product, the temperature for crystallizing the first Ni and/or Co crystallization from the aqueous solution may be selected depending on the desired crystallization product, as long as the temperature is higher than 20 °C. In this respect, in a preferred embodiment of the process of the present disclosure the temperature for crystallizing the aqueous solution in the first crystallization stage is more than 20 °C, preferably 25°C or more, more preferably 30 °C or more, and preferably 90°C or less, more preferably 70°C or less, even more preferably 50 °C or less. At such crystallization temperature, crystallization selectivity can be optimized. A crystallization temperature of below 20 °C is not preferable at this stage, because this may cause deterioration of the crystallization selectivity and, consequently, purity of the desired first Ni and/or Co crystallization product.

According to a further preferred embodiment, in particular wherein the initial aqueous solution also contains Mn besides Ni and/or Co, setting the crystallization temperature in the first crystallization stage in the range of more than 20 °C to 70 °C, more preferably of 30 °C to 50 °C is particularly preferable from the viewpoint of selective crystallization of Ni and/or Co over Mn.

The apparatus for carrying out the crystallization of the aqueous solution in the first crystallization stage is not particularly limited, and any apparatus or crystallization unit known to a person skilled in the art may be employed as desired. A crystallization time may vary depending on, for example, the apparatus, the crystallization temperature set and the desired crystallization product, and may be in the range of 0.5 h to 48 h, preferably 1 h to 24 h, without being limited thereto.

Optionally in the first crystallization stage, a volume of the aqueous solution may be reduced, preferably to reach a saturation, even more preferably to reach a supersaturation, point for the Ni and/or Co dissolved in the solution, in order to initiate and promote crystallization of Ni and/or Co. Reducing the volume should be understood to mean that a certain portion or amount of the solvent that forms the basis of the aqueous solution, which is preferably water, is removed, for example by heating the aqueous solution to a temperature and/or by applying reduced pressure suitable for evaporation of the solvent. Due to the volume reduction, the concentration of Ni and Co (respectively their salts) in the aqueous solution increases, and may be increased until a saturation point for the dissolved Ni and Co is reached. Accordingly, in the first crystallization stage, a volume of the aqueous solution may be reduced by removing an amount of solvent that is more than the amount of solvent to be removed to reach a saturation point for the Ni and Co dissolved in the solution.

Therefore, according to a further preferred embodiment of the process of the present disclosure, the first crystallization stage comprises reducing a volume of the aqueous solution at least until a saturation point for the dissolved Ni and/or Co is reached, that is, removing an amount of solvent from the aqueous solution that is more than the amount of solvent to be removed to reach a saturation point for the Ni and/or Co dissolved in the aqueous solution.

It should be understood that it may at the same time be preferable that an amount of solvent is removed that is less than the amount of solvent to be removed to reach a saturation point for other metals that may additionally be dissolved in the aqueous solution besides Ni and Co, such as Mn. The extent of volume reduction, that is, the exact amount of solvent to be removed, may vary and can be selected depending, for example, on the crystallization temperature selected for the aqueous solution and the initial concentration of metals.

The volume reduction, respectively removal of the solvent, is preferably carried out by evaporation, for example by heating the aqueous solution to a temperature of 20°C or more and suitable for evaporating the solvent, or by applying reduced pressure suitable for evaporating the solvent, or a combination thereof, without being limited thereto.

Further, according to this embodiment, the volume reduction may be carried out prior or during crystallizing the aqueous solution in the first crystallization stage, preferably by evaporation. In one embodiment, the volume reduction may be carried out prior to the crystallization, for example, by first introducing the aqueous solution into an evaporation unit in which the solvent is evaporated as desired, for example by heating at elevated temperature or by applying reduced pressure, or a combination thereof, without being limited thereto, followed by crystallization. According to this embodiment, volume reduction/evaporation and crystallization may be carried out in separate units.

In another preferred embodiment, the volume reduction may be carried out during crystallizing the aqueous solution, and preferably in the same unit, for example, by heating the aqueous solution as described above and under an environment and by employing equipment that allow a desired amount of the solvent to be evaporated during crystallization (i.e. evaporative crystallization). Such equipment is known to a person skilled in the art.

Therefore, in a still further preferred embodiment of the process of the present disclosure the first crystallization stage comprises evaporative crystallizing the aqueous solution at the temperature of 20°C or more to reduce a volume of the aqueous solution, to thereby form the first Ni and/or Co crystallization product and the first supernatant solution remaining as the liquid phase. Similar as mentioned above, evaporative crystallizing the aqueous solution at the temperature of more than 20 °C, preferably 25°C or more, more preferably 30 °C or more, and preferably 90°C or less, more preferably 70°C or less, even more preferably 50 °C or less may be particularly preferable according to this embodiment to improve and optimize crystallization selectivity. In particular, in case the initial aqueous solution also contains Mn besides Ni and/or Co, setting the temperature for evaporative crystallizing the aqueous solution in the range of more than 20 °C to 70 °C, more preferably of 30 °C to 50 °C is particularly preferable from the viewpoint of selective crystallization of Ni and/or Co over Mn.

Since the temperature for evaporative crystallizing the aqueous solution is not below 20 °C, it may be ensured that the saturation point for other metals besides Ni and Co, which may also be dissolved in the initial aqueous solution, such as Mn or Li, is not reached due to the volume reduction. Hence, co-crystallization of such metals from the aqueous solution together with Ni and Co may be reduced or even prevented.

Accordingly, the parameters of the first crystallization stage, in particular the crystallization temperature and optionally the extent of volume reduction, may be set mainly depending on the desired specification of the Ni and/or Co crystallization product. Since the aqueous solution is not cooled below 20 °C in the first crystallization stage, it is possible to selectively reach the saturation point for Ni and/or Co while not reaching the saturation point for other metals like Mn and Li. That is, according to the process of the present disclosure the first crystallization stage can be carried out at conditions at which mainly Ni (if Ni is present in the aqueous solution, but no Co) or Co (if Co is present in the aqueous solution, but no Ni), or a mixture of Ni and Co (if Ni and Co are both present in the aqueous solution, because they have similar saturation points) is selectively crystallized as the crystallization product from other metals also dissolved in the aqueous solution, due to their differences in saturation points. The first crystallization stage therefore allows for isolating a Ni- and/or Co-containing crystallization product of high purity, even if other metals like Mn and Li are additionally dissolved in the initial aqueous solution. For example, if purity is defined as quantity of Mn, Li and other metal impurities contained in the isolated first Ni and/or Co crystallization product (that is, sulfate salts, dry basis/no crystal water) as weight percent (wt.%), the purity of the first Ni and/or Co crystallization product obtained or obtainable may be >90% wt.-%, preferably >95 wt.-%, and more preferably > 97 wt.-%. Further, the composition of the first Ni and/or Co crystallization product finally obtained may be varied as desired by the parameters of the first crystallization stage, in particular by the crystallization temperature and optionally the extent of volume-reduction (i.e. the amount of evaporated solvent).

Therefore, the process of the present disclosure provides the possibility of optimization of the crystallization process depending on the desired specifications of the first crystallization product and the specification of the feedstock and the initial aqueous solution (e.g. the metals contained therein and their concentrations).

For example, in case Ni, Co and Mn are dissolved in the aqueous solution as their sulfate salts, for example because the aqueous solution comprises sulfuric acid, as the aqueous solution may be obtained by subjecting a feedstock comprising Ni, Co and Mn to acid leaching using sulfuric acid as the leaching agent, a crystallization product substantially composed of NiSO₄ and CoSO₄ can be selectively crystallized (from Mn and other metals that may be dissolved in the solution) and isolated in first crystallization stage. The term "substantially composed of" should be understood to mean that the presence of low quantities or traces of other metals/metal salts in the isolated crystallization product is not excluded. As mentioned above, using sulfuric acid as the leaching agent may be preferable according to embodiments of the present disclosure for economic reason and because of its good availability, and also because the favorable solubility behavior of the formed sulfate salts, which can be utilized for cathode active material production.

Within the framework of the present application, an acidic solution should be understood to mean an aqueous solution having a pH of less than 7.0. However, as indicated above, the aqueous solution subjected to the process of the present disclosure for recovering metal materials therefrom not necessarily has to be acidic, but may have a pH of 7.5 or less. In a further preferred embodiment of the process of the present disclosure, in particular when being obtained by acid leaching, the aqueous solution is an acidic solution and has a pH of less than 7.0, preferably less than 6.0 or less, more preferably less than pH 4.5, and still more preferably 4.0 or less, but preferably more than pH 0.5, more preferably pH 1.5 or more, and even more preferably pH 3.0 or more, in particular when subjected to the first crystallization stage, to avoid significant co-crystallization of other metals contained in the aqueous, acidic solution, in particular Mn, together with Ni and/or Co.

For isolating the first Ni and/or Co crystallization product formed in the first crystallization stage from the first supernatant solution, any method and apparatus known to those skilled in the art and commonly employed for separating a solid phase from a liquid phase can be used as desired. For example filtration in a filtration unit or centrifugation in a centrifugation unit may be carried out to separate the first Ni and/or Co crystallization product from the first supernatant solution.

The first Ni and/or Co crystallization product isolated or separated from the first supernatant solution may be subjected to a purification step, in which it is mixed with a saturated solution of the salt that is the main constituent of the crystallization product, that is, a saturated Ni salt solution or a saturated Co salt solution, or a combination thereof, as a washing solution, to further enhance the removal efficiency of undesired co-crystallized elements or salts from the crystallization product and to increase the purity of the crystals. For example, in case NiSO₄ is the main constituent of the first Ni and/or Co crystallization product, the isolated or separated first Ni and/or Co crystallization product is preferably mixed with a saturated NiSO₄ solution as the washing solution in order to remove undesired co-crystallized elements or salts from the crystallization product and to increase the purity of NiSO₄ crystals. The mixing with the saturated salt solution is preferably carried out at room temperature, and may be followed by separating the purified crystallization product from the washing solution, for example by filtration or centrifugation, washing with water and subsequent drying by methods known to a person skilled in the art. Any saturated salt solution that has been employed in this crystallization stage as washing solution for washing and mixing as described above (i.e. the washate) may be subjected to recycling for recovering the metal materials dissolved therein.

Therefore, in a further preferred embodiment of the process of the present disclosure, the first crystallization stage further comprises mixing the isolated or separated first Ni and/or Co crystallization product with a saturated salt solution of a Ni and/or Co salt at room temperature.

As used herein, ambient or room temperature should be understood to mean 23 °C ± 2 °C.

Further preferably according to this embodiment, a duration of the mixing of the first Ni and/or Co crystallization product with the saturated salt solution is in the range of 1 h to 48 h, preferably 1 h to 24 h. Such mixing duration provides a good balance between purification efficiency and process economy.

Further preferably according to this embodiment, a solid-to-liquid ratio (S/L) of crystallization product to saturated salt solution for the mixing is in the range of 1:1 to 1:7, preferably 1:2 to 1:6, and more preferably is 1:3. Such mixing ratio provides a good balance between purification efficiency and process economy.

Not crystallized Ni and Co, together with for example Mn, Li and other metal impurities, if contained in the initial aqueous solution, remain dissolved in the first supernatant solution. Therefore, according to the process of the present disclosure the first supernatant solution as obtained (i.e. without any chemical modification) from the first crystallization stage after isolation of the first Ni and/or Co crystallization product is subsequently, preferably directly after the first crystallization stage (i.e. without any intermediate process steps), subjected to a second crystallization stage to isolate and recover a second Ni and/or Co crystallization product, which is preferably different in composition compared the first Ni and/or Co crystallization product, from said first supernatant solution, wherein said second crystallization stage comprises cooling the first supernatant solution to a temperature of less than 20 °C for crystallization.

By cooling the first supernatant solution to a temperature of less than 20 °C in the second crystallization stage, the solubility limits of Ni, Co and Mn (respectively their salts), as far as dissolved in the first supernatant solution, are decreased and saturation points for these metals can be reached, and potentially also passed in case of supersaturation, such that crystallization is induced and promoted. Thereby, the second Ni and/or Co crystallization product and a second supernatant solution remaining as the liquid phase is formed. A temperature of less than 20 °C allows to not only crystallize large amounts of the Ni and Co still dissolved in the solution, but also to crystallize Mn from the solution, if present. Further preferably in this respect, the first supernatant solution is cooled to a temperature of less than 15 °C, more preferably less than 10 °C, but preferably not less than -5 °C to avoid, or at least minimize, co-crystallization of other unwanted elements and salts, respectively. In a particularly preferable embodiment of the process of the present disclosure, the second crystallization stage comprises cooling the first supernatant solution to a temperature from 0 °C to 5 °C, in particular in case Mn is present in the first supernatant solution in addition to Ni and/or Co, as the solubility of Mn decreases at such temperature.

That is, according to the process of the present disclosure, subsequent to the first crystallization stage, preferably directly after the first crystallization stage, a second crystallization stage is carried out, in which, due to the lower crystallization temperature, a further portion of Ni, or Co, or a mixture of Ni and Co, and optionally together with Mn, if Mn is additionally present in the initial aqueous solution, can be selectively crystallized from other metals/metal salts dissolved in the first supernatant solution, for example Li, to form the main metal constituents of the second Ni and/or Co crystallization product. However, the presence of low amounts or traces of other metal(s) or metal salt(s) co-crystallized besides Ni, Co and optionally Mn in the second Ni and/or Co crystallization product is not excluded. Since the solubility limits Ni, Co and Mn (respectively their salts) depend on the temperature of the solvent, the cooling temperature in the second crystallization stage may be selected depending on the desired specification of the second Ni and/or Co crystallization product.

From the above it follows that the second Ni and/or Co crystallization product isolated from the second crystallization stage is different from the first Ni and/or Co crystallization product, which not only means that these products are separately isolated in the respective stages, but also means a difference in composition, that is, in the content or ratio of Ni and Co in each crystallization product, and in the constituents of the crystallization products.

Since the crystallization temperature has an influence on crystallization selectivity, and thus on the composition of the crystallization product, by proper selection of the cooling temperature the second crystallization stage likewise provides the possibility of optimization of the crystallization process depending on the desired specification of the crystallization product to be isolated, and depending on the specification of the initial aqueous solution and the first supernatant solution (e.g. the metals dissolved therein and their concentrations), and makes it possible to isolate and recover a crystallization product comprising Ni and/or Co, and optionally Mn, as the main metal constituents, even if other metals like Li are present in the first supernatant solution. For example, in case Ni, Co and Mn are dissolved in the first supernatant solution as sulfate salts, for example because the first supernatant solution comprises sulfuric acid which may have been used as leaching agent in the acid leaching of a feedstock comprising Ni, Co and Mn, the crystallization product selectively crystallized and isolated in second crystallization stage is substantially composed of NiSO₄, CoSO₄ and MnSO₄.

The apparatus for carrying out the crystallization of the first supernatant solution in the second crystallization stage is not particularly limited, and any apparatus or crystallization unit known to a person skilled in the art may be employed as desired. A crystallization time may vary depending on, for example, the apparatus, the crystallization temperature set and the desired crystallization product, and may be in the range of 0.5 h to 48 h, preferably 1 h to 24 h, without being limited thereto.

It may be preferable in the second crystallization stage, mainly but not necessarily depending on whether or not and to what extend volume reduction has been carried out in the first crystallization stage, to reduce a volume of the first supernatant solution, preferably before the cooling, and preferably by evaporation, in order to decrease the solubility limits of metals (respectively their salts) dissolved in the solution to thereby increase the recovery yield.

For example, the optional volume reduction in the second crystallization stage may be carried out by heating the first supernatant solution under an environment and by employing equipment that allow a certain proportion of the solvent, which is preferably water, to be evaporated, without being limited thereto. Such equipment is known to a person skilled in the art. Additionally or alternatively, the volume may be reduced by applying reduced pressure. According to a preferred example, the volume reduction may be carried out before the cooling by introducing the first supernatant solution into an evaporation unit in which the solvent is evaporated to a certain extent by heating at elevated temperature, or by applying reduced pressure, or a combination thereof, but preferably by heating at elevated temperature and preferably at atmospheric pressure.

Therefore, in a further preferred embodiment of the present disclosure, the second crystallization stage comprises, preferably before the cooling of the first supernatant solution, reducing a volume of the first supernatant solution obtained from the first crystallization stage, preferably by evaporation.

In case such heating of the first supernatant solution to reduce its volume is carried out in the second crystallization stage, since the heating temperature may also influence the composition of the crystallization product, the preferred heating temperature may be varied and be selected depending on the desired crystallization product, and independently from the heating temperature applied in the first crystallization stage. In this respect, it is preferable according to this embodiment of the process of the present disclosure that the second crystallization stage comprises reducing the volume of the first supernatant solution by heating the first supernatant solution to a temperature of more than 20 °C, preferably 25 °C or more, more preferably 30 °C or more, and preferably 90 °C or less, more preferably 70 °C or less, and even more preferably 50 °C or less.

In a still further preferred embodiment of the process of the present disclosure the second crystallization stage comprises, before the cooling of the first supernatant solution, reducing a volume of the first supernatant solution by heating the first supernatant solution to a temperature of more than 20 °C, preferably 25 °C or more, more preferably 30 °C or more, and preferably 90 °C or less, more preferably 70 °C or less, even more preferably 50 °C or less, and/or by application of reduced pressure.

Similar, as outlined above with respect to the first crystallization stage, the parameters of the second crystallization stage, in particular the cooling temperature and optionally the extent of volume reduction, may be selected and set as desired mainly depending on the desired specification of the second Ni and/or Co crystallization product. Since the first supernatant solution is cooled to temperatures below 20°C for crystallization, it can be ensured that a further portion of the Ni and Co dissolved in the initial aqueous solution and not yet crystallized may be selectively recovered together with a portion of Mn, if present, while other metals like Li and impurities still remain dissolved in solution, thereby allowing to increase the recovery rate of Ni and Co and to isolate a highly pure crystallization product rich in Ni and/or Co, and optionally Mn. For example, if purity is defined as quantity of Li and other metal impurities contained in the isolated second Ni and/or Co crystallization product (that is, sulfate salts, dry basis/no crystal water) as wt.%, the purity considering valuable metals Ni, Co and Mn of the crystallization product obtained or obtainable may be >90% wt.-%, preferably >95 wt.-%, and more preferably > 97 wt.-%.

For isolating the second Ni and/or Co crystallization product formed in the second crystallization stage, any method and apparatus known to those skilled in the art and commonly employed for separating a solid phase from a liquid phase can be used as desired, and independently from the first crystallization stage. For example filtration in a filtration unit or centrifugation in a centrifugation unit may be carried out to separate the second Ni and/or Co crystallization product from the second supernatant solution.

Not crystallized Ni, Co and Mn together with for example Li and traces of other metal impurities, if contained in the initial aqueous solution, remain dissolved in the second supernatant solution.

Similar with respect to the first Ni and/or Co crystallization product, the second Ni and/or Co crystallization product isolated or separated from the second supernatant solution may be subjected to a purification step of mixing the second Ni and/or Co crystallization product with a saturated solution of the salt that is the main constituent of the crystallization product, preferably a saturated Ni salt solution or a saturated Co salt solution, or a combination thereof, as a washing solution, to further enhance the removal efficiency of undesired co-crystallized elements or salts from the crystallization product and to increase the purity of the crystals. For example, in case NiSO₄ is the main constituent of the second Ni and/or Co crystallization product, the isolated or separated second Ni and/or Co crystallization product is preferably mixed with a saturated NiSO₄ solution as the washing solution in order to remove undesired co-crystallized elements or salts from the crystallization product and to increase the purity of NiSO₄ crystals. The mixing with the saturated salt solution is preferably carried out at room temperature, and may be followed by separating the purified crystallization product from the washing solution, for example by filtration or centrifugation, washing with water and subsequent drying by methods known to a person skilled in the art. Any saturated salt solution that has been employed in this stage as washing solution for washing and mixing with the crystallization product as described above (i.e. the washate) may be subjected to recycling for recovering the metal materials dissolved therein.

Therefore, in a further preferred embodiment of the process of the present disclosure, the second crystallization stage, independently from the first crystallization stage, further comprises mixing the isolated or separated second Ni and/or Co crystallization product with a saturated salt solution of a Ni and/or Co salt at room temperature.

Further preferably according to this embodiment, a duration of the mixing of the second Ni and/or Co crystallization product with the saturated salt solution is in the range of 1 h to 48 h, preferably 1 h to 24 h. Such mixing duration provides a good balance between purification efficiency and process economy.

Further preferably according to this embodiment, a solid-to-liquid ratio (S/L) of crystallization product to saturated salt solution for the mixing is in the range of 1:1 to 1:7, preferably 1:2 to 1:6, and more preferably is 1:3. Such mixing ratio provides a good balance between purification efficiency and process economy.

The process of the present disclosure including the first and second crystallization stages makes it possible to isolate different crystallization products including valuable metals Ni, Co and Mn, and in high purity and quality, the compositions of which may be varied depending on the desired specifications, thereby broadening the number of products obtainable and generating a high value of the obtained products for further processing. Also, the two crystallization stages offer the possibility to selectively recover Ni and Co even in the presence of Mn, if required, and to obtain a Ni and Co containing material of high purity and a Ni-enriched material containing Ni, Co and Mn, if desired.

The highly pure crystallization products isolated and separated from the first and second crystallization stages may advantageously be used to produce a positive electrode material for a lithium ion secondary battery, in particular in a process for the recycling of lithium ion secondary batteries, without being limited to such use.

The second supernatant solution obtained from the second crystallization stage may still contain not crystallized Ni, Co and/or Mn together with for example Li and traces of metal impurities, which, as far as present, may have remained in solution in the process so far. In order to further recover not crystallized Ni, Co and/or Mn and to thereby increase the overall recovery yield of valuable metals Ni, Co and Mn from the initial aqueous solution, the second supernatant solution obtained from the second crystallization stage after isolation or separation of the second crystallization product may subsequently, preferably directly after the second crystallization stage, be subjected to one or more further recovery stages, in which these valuable metals are precipitated in the solution.

According to a further preferred embodiment the process of the present disclosure further comprises, subsequent to, preferably directly after the second crystallization stage, a first precipitation stage which comprises raising a pH of the second supernatant solution obtained from the second crystallization stage by adding a source of hydroxide to form a first precipitation product and a first supernate, and isolating the first precipitation product from the first supernate.

According to this embodiment of the process of the present disclosure, a precipitation stage is carried out after the second crystallization stage, in which through addition of a source of hydroxide the pH of the second supernatant solution obtained from the second crystallization stage is raised to thereby induce precipitation or coprecipitation of Ni, Co and Mn, as far as present in the second supernatant solution, from the solution in the form of a hydroxide product, since the hydroxide ions react with the metals salts dissolved in the second supernatant solution, such as NiSO₄, CoSO₄ and MnSO₄, to thereby form hydroxides of Ni, Co and Mn, for example Ni(OH)₂, Co(OH)₂ and Mn(OH)₂, respectively, which co-precipitate due to their lower solubility limits. Thereby, the first precipitation product is formed, and the first supernate is left behind as the liquid phase.

In the first precipitation stage according to this embodiment of the process, the pH is raised to a predetermined value by the addition of the source of hydroxide, such that hydroxides of Ni, or Co, or a mixture thereof, and together with Mn, if Mn is present in second supernatant solution, can be selectively co-precipitated from other metal ions/salts that still may be dissolved in the second supernatant solution, for example Li, due to their differences in solubility limit, which consequently form the main metal constituents of the first precipitation product. This however does not exclude the presence of low amounts or traces of other metal(s) or metal salt(s) co-precipitated in the first precipitation product.

The first precipitation stage according to this embodiment of the process of the present disclosure provides the possibility of optimization of the (co-)precipitation depending on the desired specifications of the first precipitation product, and depending on the specification of the initial aqueous solution or the feedstock employed (for example, the metals contained therein and their concentrations).

For isolating the first precipitation product formed in the first precipitation stage, any method and apparatus known to those skilled in the art and commonly employed for separating a solid phase from a liquid phase can be used as desired. For example, filtration in a filtration unit or centrifugation in a centrifugation unit may be carried out to separate and isolate the first precipitation product from the first supernate.

Mn not yet completely precipitated, together with for example Li and traces of other metal impurities, if contained in the initial aqueous solution, remain,at least partially, dissolved in the first supernate.

Further preferably according to this embodiment of the process of the present disclosure, the first precipitation stage comprises raising the pH of the second supernatant solution obtained from the second crystallization stage to a maximum of pH 8.0 (±0.1), and preferably to more than pH 7.0, more preferably to pH 7.5 or more, for example from more than pH 7.5 to pH 8.0, by addition of the source of hydroxide. At such pH of the solution, precipitation of substantially the complete remainder of Ni and Co dissolved in the second supernatant solution, optionally together with a further portion of Mn, can be achieved, while co-precipitation of a significant amount of other metals additionally contained in the solution, such as Li, can be prevented.

Precipitation in the first precipitation stage may be carried out by simultaneously feeding the second supernatant solution with the source of hydroxide to a reaction vessel of, for example, a precipitating reactor and mixing, before a predetermined residence time is set. However, another process or apparatus may be employed by a person skilled in the art for this precipitation stage as desired. Further preferably according to this embodiment, a residence time may be set to 0.5 h or more, preferably 5 h or more, for example 10 h or more. By adopting such residence time in the reaction vessel, the particle size of the precipitation product may be controlled.

Further preferably according to this embodiment, the first precipitation stage is carried out at a reaction temperature of between 25 °C and 60 °C, more preferably between 40 °C and 50 °C. At this reaction temperature, the residence time can be minimized. This reaction temperature moreover may be advantageous in terms of particle size and shape of the precipitated product. Furthermore, such reaction temperature may increase the solubility limit of unwanted salts that may be formed through addition of the source of hydroxide.

The source of hydroxide added in the first precipitation stage according to this embodiment of the process of the present disclosure may be a hydroxide-containing compound or a hydroxide-containing aqueous solution, and is preferably selected from an alkali metal hydroxide, such as LiOH, NaOH, or KOH, or an aqueous solution thereof, an alkaline earth metal hydroxide, such as Mg(OH)₂ or Ca(OH)₂, or an aqueous solution thereof, Mn(OH)₂ or aqueous solution thereof, and an ammonia aqueous solution, or a mixture of one or more thereof. Especially preferably, the source of hydroxide to be added in the first precipitation stage is NaOH, or NaOH aqueous solution, in particular for economic reasons and its good availability, and because the Na⁺ ions can remain in the solution without ending up in the precipitated product.

In the first precipitation stage, substantially the complete remaining Ni and Co, and a portion of the Mn contained in the second supernatant solution can be isolated and recovered, while a portion of Mn, Li and metal impurities, as far as present, are not precipitated and remain dissolved in the solution. After the first precipitation stage, in the obtained supernate a final concentration of Ni may be lower than 400 ppm, and may optionally be lower than 50 ppm, such as 33 ppm, and a final concentration of Co may be lower than 400 ppm, such as 325 ppm. Thus, valuable materials like Ni, Co and Mn can be efficiently separated from undesired metal impurities and isolated as a Ni, Co and/or Mn hydroxide product, and Ni and Co can be recovered at a high recovery rate from the initial aqueous solution according to this embodiment of the process of the present disclosure.

In a still further preferred embodiment, the process of the present disclosure further comprises, subsequent to, preferably directly after the first precipitation stage, a second precipitation stage which comprises raising the pH of the first supernate obtained from the first precipitation stage by adding a source of hydroxide to form a second precipitation product, which is different from the first precipitation product, and a second supernate, and isolating the second precipitation product from the second supernate. It is possible according to this embodiment to recover the remaining Mn that may still be dissolved in the first supernate obtained from the first precipitation stage.

That is, according to this embodiment of the process of the present disclosure a second precipitation stage is carried out after the first precipitation stage, in which through addition of a source of hydroxide to the first supernate the pH of the solution is further raised to a predetermined value, such that Mn still dissolved in the first supernate can be selectively precipitated from other metal ions/salts dissolved therein, for example Li, in the form of its hydroxide as the second precipitation product due to its lower solubility limit. Thereby, the second precipitation product and the second supernate remaining as the liquid phase is formed.

From the above it follows that the first and second precipitation products, which can be isolated according to these embodiments of the process of the present disclosure, are different from each other, which not only means that these products are separately isolated in the respective precipitation stages, but also means a difference in composition with respect to their metal constituents. As indicted above, a Mn hydroxide product forms the main metal constituents of the second precipitation product. This however does not exclude the presence of low amounts or traces of other metal(s) or metal salt(s) co-precipitated in the second precipitation product. The exact composition of the first and second precipitation products isolated may however vary, as already outlined above with respect to the crystallization stages.

The second precipitation stage according to this embodiment of the process of the present disclosure provides the possibility of optimization of the precipitation depending on the desired specifications of the second precipitation product and of the initial aqueous solution or the feedstock employed (e.g. the metals contained therein and their concentrations).

For isolating the second precipitation product formed in the second precipitation stage, any method and apparatus known to those skilled in the art and commonly employed for separating a solid phase from a liquid phase can be used as desired, independently form the first precipitation stage. For example, filtration in a filtration unit or centrifugation in a centrifugation unit may be carried out to separate the second precipitation product from the second supernate. Separation may optionally be followed by washing of the separated precipitation product, preferably with water, and subsequent drying by methods known to a person skilled in the art.

If contained in the initial aqueous solution, for example Li together with traces of other metal impurities not yet precipitated remain dissolved in the second supernate.

Further preferably according to this embodiment of the process of the present disclosure, the second precipitation stage comprises raising the pH of the first supernate obtained from the first precipitation stage to more than pH 8.0, preferably to pH 9.5 or more, and preferably to pH 10.5 or less, by addition of the source of hydroxide. At such pH of the solution, precipitation of substantially the complete remainder of Mn dissolved in the first supernate can be achieved, while co-precipitation of a significant amount of other metals additionally contained in the solution, such as Li, can be prevented. After the second precipitation stage, a final concentration of Mn in the second supernate of lower than 800 ppm may be achieved. Accordingly, also with respect to Mn a high recovery rate from the initial aqueous solution can be achieved by this embodiment of the process of the present disclosure.

Independently form the first precipitation stage, precipitation in the second precipitation stage may be carried out by simultaneously feeding the first supernate with the source of hydroxide to a reaction vessel of, for example, a precipitating reactor and mixing, before a predetermined residence time is set. However, another process or apparatus may be employed by a person skilled in the art for this precipitation stage as desired. Further preferably according to this embodiment, a residence time may be set to 0.5 h or more, preferably 5 h or more, for example 10 h or more. By adopting such residence time in the reaction vessel, the particle size of the precipitation product may be controlled

Further preferably according to this embodiment, the second precipitation stage is carried out, independently from the first precipitation stage, at a reaction temperature of between 25 °C and 60 °C, more preferably between 40 °C and 50 °C. At this reaction temperature, the residence time can be minimized. This reaction temperature moreover may be advantageous in terms of particle size and shape of the precipitated product. Furthermore, such reaction temperature may increase the solubility limit of unwanted salts that may be formed through addition of the source of hydroxide.

Further preferably according to this embodiment, the source of hydroxide added in the second precipitation stage, independently from the first precipitation stage, may be a hydroxide-containing compound or a hydroxide-containing aqueous solution, and is preferably selected from an alkali metal hydroxide, such as LiOH, NaOH, or KOH, or an aqueous solution thereof, an alkaline earth metal hydroxide, such as Mg(OH)₂ or Ca(OH)₂, or an aqueous solution thereof, and an ammonia aqueous solution, or a mixture of one or more thereof. Especially preferably, the source of hydroxide to be added in the second precipitation stage is NaOH, or NaOH aqueous solution, for the same reasons as outlined above with respect to the first precipitation stage. Further preferably, in the second precipitation stage the same source of hydroxide is used as in the first precipitation stage, excluding Mn(OH)₂, but preferably in a different (i.e. higher) concentration so as to achieve a higher pH as required.

After the second precipitation stage, a final concentration of each of Ni, Co and Mn in the resulting solution may be lower than 800 ppm. Since precipitation of metal impurities and Li from the first supernate, as far as present, can be prevented, valuable materials like Ni, Co and Mn can be efficiently recovered and at high recovery rates from the initial aqueous solution. The low residual amount of Ni, Co and Mn additionally allows for facilitating the subsequent recovery of other valuable metals, such as Li, from the second supernate.

In a further preferred embodiment of the present disclosure, the process may further comprise, before carrying out the first crystallization stage, a step of providing the aqueous solution by subjecting a feedstock which comprises at least one of Ni and Co, and optionally Mn, preferably Ni and Co, and optionally Mn, more preferably at least two of Ni, Co and Mn, and still more preferably comprises Ni, Co and Mn, wherein Ni is preferably the main metal constituent, to a wet chemical process, preferably a hydrometallurgical process, and more preferably to liquid-phase acid leaching. The conditions and type of acid for carrying out the liquid-phase acid leaching according to this embodiment are the same as described above. The feedstock according to this embodiment of the present disclosure is preferably a feedstock which may be selected from recycled or residual materials feedstocks and metal-based raw material feedstocks, and combinations thereof, as described above. Thus, particularly preferably according to this embodiment, the aqueous solution is an acidic solution and the feedstock for providing the acidic solution comprises a material derived from recycled or crushed lithium ion batteries or lithium ion battery manufacturing scrap, and in particular is black mass.

In a further preferred embodiment of the present disclosure, the process may further comprise, before carrying out the first crystallization stage, and/or before carrying out a step of providing the aqueous solution according to an embodiment of the process of the present disclosure, a step of providing a feedstock which comprises at least one of Ni and Co, and optionally Mn, preferably Ni and Co, and optionally Mn, more preferably at least two of Ni, Co and Mn, and still more preferably comprises Ni, Co and Mn, wherein Ni is preferably the main metal constituent, which step preferably comprises mechanically treating, in particular crushing or shredding as described above, of one or more lithium-ion batteries, in particular one or more NCM-based lithium-ion batteries to obtain black mass.

As indicated above, the aqueous solution comprising at least one of Ni and Co, and optionally Mn, dissolved therein, may additionally comprise other elements, compounds and/or metals dissolved therein as soluble metal salts. For example, in case the aqueous solution is obtained by subjecting a feedstock resulting from a mechanical pre-treatment of lithium-ion batteries, in particular black mass, to a wet chemical process like acid leaching, the resulting aqueous solution (i.e. the leachate or pregnant leach solution) may comprise Li and valuable cathode materials Ni, Co and/or Mn as the main components, but may additionally comprise one or more of Al, Cu, Fe, Mg, Zn, Ca, Zr, Na and K as metal impurities, without being limited thereto.

It may be preferably according to the process of the present disclosure that a total concentration of metal impurities, that is, metals besides Ni, Co and Mn and not including Li, preferably of metal impurities selected from one or more of Al, Cu, Fe, Mg Zn, Ca, Zr, Na and K, for example Al, Cu and Fe; or Al, Cu, Fe and Zn; or Al, Cu, Fe, Zn and Ca; or Al, Cu, Fe, Zn, Ca and Zr; or Al, Cu, Fe, Zn, Ca, Zr and K, in the aqueous solution before carrying out the first crystallization stage (that is, in the aqueous solution subjected to the first crystallization stage) is lower than 800 ppm, preferably lower than 400 ppm, more preferably lower than 100 ppm, even more preferably lower than 50 ppm, and even more preferably lower than 25 ppm.

In a further preferred embodiment the process of the present disclosure further comprises, preferably before carrying out the first crystallization stage, subjecting the aqueous solution to an impurity removal stage for removal of metal impurities, preferably for removal of Al, Cu, Fe and/or Zn, from the aqueous solution, and preferably to a total concentration of metal impurities in the aqueous solution of lower than 800 ppm, preferably lower than 400 ppm, more preferably lower than 100 ppm, even more preferably lower than 50 ppm, and even more preferably lower than 25 ppm. Such impurity removal stage, preferably for removal of Al, Cu, Fe and/or Zn, may in particular be preferable in case the aqueous solution is obtained by subjecting a feedstock resulting from a mechanical pre-treatment of lithium-ion batteries, in particular black mass, to a wet chemical process like acid leaching.

As indicated above, since a final concentration of each of Ni, Co and Mn in the solution obtained by or obtainable by the process of the present disclosure may be lower than 800 ppm, the subsequent recovery of Li from the solution is facilitated.

Therefore, in a further preferred embodiment, in particular in case the initial aqueous solution additionally comprises Li, the process of the present disclosure may further comprise a Li recovery stage of isolating Li from the solution which is substantially free of Ni, Co and Mn. That is, depending on the composition of the initial aqueous solution or the feedstock for providing the aqueous solution, such additional Li recovery stage may be conducted after the second crystallization stage (for example in case the initial aqueous solution comprises at least one of Ni and Co only), or after the second precipitation stage (for example in case the initial aqueous solution comprises Mn and at least one of Ni and Co). The process of the present disclosure allows for facilitation the recovery of Li due to the above-mentioned low concentrations of Ni, Co and Mn in the solution.

As indicated above, the process of the present disclosure allows for efficiently recovering Ni, Co and Mn at high recovery rates and also for facilitation the recovery of Li from an aqueous solution that is obtained by subjecting a feedstock resulting from a mechanical pre-treatment of lithium-ion batteries, such as black mass, to a wet chemical process, and therefore the process of the present disclosure may be integrated and used in the recycling of batteries in battery active material precursor synthesis, in particular to produce a positive electrode material for a lithium-ion secondary battery (LIB).

Therefore, the present disclosure further provides for a method for the recycling of lithium-ion batteries, in particular for recovering materials from lithium-ion batteries, and in particular to produce a positive electrode material for a lithium-ion secondary battery (LIB), wherein the method comprises the process according to the present disclosure or any preferred embodiment thereof.

Without further elaboration, it is believed that a person skilled in the art can, using the present description including the accompanying drawings, utilize the present invention to its fullest extent. Although the invention has been described herein with regard to its preferred embodiments, which represent the best mode for carrying out the invention, it is understood that various changes as would be obvious to one of ordinary skill in this art can be made without departing from the scope of the disclosure, which is set forth in the appended claims.

Preferred embodiments of the present invention are further described in detail with Examples. However, it should be understood that these Examples are given for illustrative purpose only and, therefore, should not limit the scope of this application.

### Examples

Elemental analysis: The elemental composition of crystals prepared and isolated in the examples is determined by digestion in aqua regia and analysis of the digested solution by inductively coupled plasma optical emission spectroscopy (ICP-OES).

Recovery yield: The recovery yield given with respect to Examples 1 and 2 (see Tables 1 and 2) denotes the mass fraction of each element obtained in the crystals relative to the initial mass in the feed.

Distribution coefficient and selectivity: The distribution coefficient, denoted *Kᵢ*, determined with respect to Examples 1 and 2 (see Tables 1 and 2 and equation 1 below) indicates a relation between molar concentrations of a component *i* in the solid, *xᵢ*, and the liquid phase, *y*ᵢ. The partition of components tends towards the solid phase as the distribution coefficient increases. The selectivity, denoted *α*, (see Tables 1 and 2 and equation 2 below) describes the ratio between the distribution coefficient of the impurity ion i and the host ion *A. α* needs to be minimized as much as possible to improve the purity of crystals. The impurity ion tends to be taken with the host ion in the crystalline structure if a tends to 1. ${K}_{i} = \frac{{x}_{i}}{{y}_{i}}$ (Eq. 1) $α = \frac{{K}_{i}}{{K}_{A}}$ (Eq. 2)

### Example 1: Dual crystallization at 50 °C and 0 °C

A feedstock solution is prepared as a synthetic solution composed of a mixture of NiSO₄·6H₂O, CoSO₄·7H₂O, and MnSO₄·H₂O, dissolved in distillate water and having a pH of 5.9, with the following elemental composition in wt%: 9.0% Ni, 2.7% Co and 1.4% Mn, which is representative of a process solution obtain from acid leaching of black mass in the recycling of lithium-ion batteries.

In a first crystallisation stage, the feedstock solution is introduced into a glass reactor, which is submerged in a water bath with controlled temperature maintained at 50 °C and rotated for 24 h at 30 rpm for crystallization. The crystals formed are then separated from the feedstock solution by centrifugation at room temperature. The elemental composition of the crystals formed in this stage (Crystallisation stage #1 at 50 °C) is shown in Table 1 below, as well as the recovery yield.

The centrate solution resulting after separation of the formed crystals serves as the feedstock for the second crystallisation stage, in which the centrate solution is introduced into a jacketed reactor, which is mixed with an overhead stirrer at 100 rpm for 24 h at 0°C. The crystals formed are separated from the feedstock solution by centrifugation at room temperature. The elemental composition of the crystals formed in this stage (Crystallisation stage #2 at 0 °C) is shown in Table 1 below, as well as the recovery yield.

**Table 1. Experimental results on Example 1: Dual crystallisation at 50°C and 0°C.**

| | **Crystallisation stage #1 at 50°C** | | | | **Crystallisation stage #2 at 0°C** | | | | |
|---|---|---|---|---|---|---|---|---|---|
| | Crystal composition (wt. %) | K_{c} | α | Recovery yield | Crystal composition (wt. %) | K_{c} | α | Recovery yield | Overall recovery yield |
| Ni | 16.8 | 3.8 | - | 36% | 15.7 | 5.3 | - | 47% | 61% |
| Co | 5.2 | 4.0 | 1.08 (Co/Ni) | 39% | 3.8 | 3.7 | 0.76 (Co/Ni) | 40% | 60% |
| Mn | 0.4 | 0.3 | 0.13 (Mn/Ni) | 9% | 0.7 | 0.7 | 0.16 (Mn/Ni) | 13% | 20% |

As can be seen by the results given in Table 1, compared to the feedstock the crystals show a high enrichment in Ni and Co, accompanied by a low Mn content. Considering the distribution coefficients (*Kc*), Ni and Co exhibit a preference for the solid phase, serving as a crucial indicator for their efficient recovery as crystals from the feedstock. The low partition of Mn in the solid phase for the crystals obtained during the first crystallisation stage indicates a favourable selective recovery of Ni and Co over Mn during crystallization at 50°C. The selectivity (α) of Co to Ni, close to 1, indicates a propensity for both elements to crystallize together. Conversely, the selectivity of Mn to Ni indicates a low affinity for Mn to incorporate into the crystals, especially at 50°C. In other words, there is an indication for selective recovery of Ni over Mn in crystals from the first crystallisation stage at 50°C. The indication of selective crystallisation of Ni and Co is reinforced by the comparatively low recovery of Mn at each crystallisation stage.

### Example 2: Dual crystallization at 30 °C and 0 °C

A feedstock solution is prepared is the same manner and having the same composition as described with respect to Example 1.

First and second crystallization stages are carried out in the same way as described in Example 1, with the exception that in Example 2 the first crystallisation stage is carried out at 30°C.

The elemental composition of the crystals formed in the first stage (Crystallisation stage #1 at 30 °C) and in the second stage (Crystallisation stage #2 at 0 °C) is determined. The results are shown in Table 2 below, as well as the recovery yield.

**Table 2. Experimental results on Example 2: Dual crystallisation at 30°C and 0°C.**

| | **Crystallisation stage #1 at 30°C** | | | | **Crystallisation stage #2 at 0°C** | | | | |
|---|---|---|---|---|---|---|---|---|---|
| | Crystal concentration (wt. %) | K_{c} | α | Recovery yield | Crystal concentration (wt. %) | K_{c} | α | Recovery yield | Overall recovery yield |
| Ni | 16.4 | 5.0 | - | 60% | 16.2 | 7.4 | - | 53% | 77% |
| Co | 5.1 | 5.0 | 1.01 (Co/Ni) | 62% | 3.9 | 5.0 | 0.67 (Co/Ni) | 42% | 75% |
| Mn | 0.5 | 0.4 | 0.08 (Mn/Ni) | 12% | 1.2 | 0.9 | 0.12 (Mn/Ni) | 12% | 21% |

As can be seen by the results given in Table 2, similar to the findings in Example 1, a trend is observed in the crystals, wherein the content of Ni and Co increases while the content of Mn decreases compared to the feedstock solution. At 0°C, where crystals exhibit the highest Mn content, *Kc* of Mn is approximately 1, indicating an almost equal distribution between the liquid and the solid phases. Example 2 exhibits the highest overall recovery yields, reaching values of 77% for Ni and 75% for Co. Conducting the first crystallisation stage at 30°C leads to a 1.6-fold increase in the recovery of both Ni and Co, along with a 1.4-fold increase for Mn compared to conditions at 50°C. Hence, the temperature during the first crystallisation stage has an impact on the overall recovery yield, enhancing the selective recovery of Ni and Co relative to Mn.

### Example 3: Purification tests

The crystals obtained from Example 1 and Example 2 are each introduced into a saturated NiSO₄ solution prepared at room temperature. The conditions involved magnetic agitation at 100 rpm, a solid-to-liquid ratio (S/L) of 1:5, and maintaining room temperature for 24 hours. Subsequently, the final crystals are each separated by centrifugation and washed with saturated NiSO₄ solution equivalent to 10% by weight of the wet crystals. The elemental composition of the final, washed crystals is determined. The results are shown in Tables 3 and 4 below.

The purification efficiency ("% removal") is determined by considering the initial mass of a component *i* in the crystals, denoted as *mᵢ⁰*, and its mass in the purified crystals, denoted as *mᵢ*¹*,* by the following equation 3. $% removal = \frac{{m}_{i}^{0} - {m}_{i}^{1}}{{m}_{i}^{0}}$ (Eq. 3)

**Table 3. Results on purification on crystals from Example 1: composition of the crystals and purification efficiency during the purification stage.**

| | **Crystallisation stage #1 at 50°C** | | | | **Crystallisation stage #2 at 0°C** | | |
|---|---|---|---|---|---|---|---|
| | Initial crystals concentrati on (wt. %) | Purified crystals concentrati on (wt. %) | Purificatio n efficiency | | Initial crystals concentrati on (wt. %) | Purified crystals concentrati on (wt. %) | Purificatio n efficiency |
| Ni | 16.81 | 17.47 | 0% | | 15.74 | 18.56 | 0 % |
| C o | 5.23 | 1.22 | 76 % | | 3.78 | 0.89 | 76 % |
| M n | 0.38 | 0.03 | 88 % | | 0.73 | 0.06 | 89 % |

**Table 4. Results on purification on crystals from Example 2: composition of the crystals and purification efficiency during the purification stage.**

| | **Crystallisation stage #1 at 30°C** | | | | **Crystallisation stage #2 at 0°C** | | |
|---|---|---|---|---|---|---|---|
| | Initial crystals concentrati on (wt. %) | Purified crystals concentrati on (wt. %) | Purificatio n efficiency | | Initial crystals concentrati on (wt. %) | Purified crystals concentrati on (wt. %) | Purificatio n efficiency |
| Ni | 16.4 | 18.8 | 0 % | | 16.25 | 18.29 | 0 % |
| C o | 5.1 | 1.3 | 77 % | | 3.83 | 0.86 | 80 % |
| M n | 0.5 | 0.04 | 92 % | | 1.11 | 0.09 | 93 % |

The results given in Tables 3 and 4 indicate that mixing the crystallization products with saturated NiSO₄ solution exerts a positive effect on the purity of NiSO₄ crystals, as evidenced by a high purification efficiency reaching up to 80% removal for Co and 93% removal for Mn.

## Claims

1. A process for recovering metal materials from an aqueous solution preferably obtained by subjecting a feedstock to a wet chemical process, wherein the aqueous solution comprises at least one of Ni and Co, and optionally Mn, dissolved therein, and wherein the process comprises:
- a first crystallization stage comprising crystallizing the aqueous solution at a temperature of 20 °C or more to form a first Ni and/or Co crystallization product and a first supernatant solution, and isolating the first Ni and/or Co crystallization product from the first supernatant solution; and
- a second crystallization stage comprising cooling the first supernatant solution to a temperature of less than 20 °C for crystallization, to form a second Ni and/or Co crystallization product, which is different from the first Ni and/or Co crystallization product, and a second supernatant solution, and isolating the second Ni and/or Co crystallization product from the second supernatant solution.

2. The process according to claim 1, wherein the aqueous solution has a pH of 7.5 or less, preferably less than pH 7.0, and more preferably less than pH 6.0.

3. The process according to claim 1 or 2 wherein the aqueous solution comprises one or more of sulfuric acid, nitric acid, hydrochloric acid, hydroxylamine hydrochloride and citric acid.

4. The process according to any one of claims 1 to 3, wherein the first crystallization stage comprises evaporative crystallizing the aqueous solution at the temperature of 20°C or more to reduce a volume of the aqueous solution.

5. The process according to any one of claims 1 to 4, wherein the temperature for crystallizing the aqueous solution in the first crystallization stage is more than 20 °C, preferably 25°C or more, more preferably 30 °C or more, and preferably 90°C or less, more preferably 70°C or less, even more preferably 50 °C or less.

6. The process according to any one of claims 1 to 5, wherein the second crystallization stage comprises, preferably before the cooling, reducing a volume of the first supernatant solution obtained from the first crystallization stage, preferably by evaporation.

7. The process according to any one of claims 1 to 6, wherein the second crystallization stage comprises, before the cooling, reducing a volume of the first supernatant solution by heating the first supernatant solution to a temperature of more than 20 °C, preferably 25 °C or more, more preferably 30 °C or more, and preferably 90 °C or less, more preferably 70 °C or less, even more preferably 50 °C or less, or by application of reduced pressure, or a combination thereof.

8. The process according to any one of claims 1 to 7, wherein the process further comprises, after the second crystallization stage:
- a first precipitation stage comprising raising a pH of the second supernatant solution obtained from the second crystallization stage by adding a source of hydroxide to form a first precipitation product and a first supernate, and isolating the first precipitation product from the first supernate.

9. The process according to claim 8, wherein the first precipitation stage comprises raising the pH of the second supernatant solution obtained from the second crystallization stage to a maximum of pH 8.0 by adding the source of hydroxide, and preferably to more than pH 7, more preferably to more than pH 7.5.

10. The process according to claim 8 or 9, wherein the process further comprises, after the first precipitation stage:
- a second precipitation stage comprising raising a pH of the first supernate obtained from the first precipitation stage by adding a source of hydroxide to form a second precipitation product, which is different from the first precipitation product, and a second supernate, and isolating the second precipitation product from the second supernate.

11. The process according to claim 10, wherein the second precipitation stage comprises raising the pH of the first supernate to more than pH 8.0, preferably to pH 9.5 or more, by adding the source of hydroxide.

12. The process according to any one of claims 8 to 11, wherein the source of hydroxide added in the first precipitation stage is selected from an alkali metal hydroxide or an aqueous solution thereof, an alkaline earth metal hydroxide or an aqueous solution thereof, Mn(OH)₂ or an aqueous solution thereof, and an ammonia aqueous solution, or a mixture of one or more thereof, and/or
wherein the source of hydroxide added in the second precipitation stage is selected, independently from the first precipitation stage, from an alkali metal hydroxide or an aqueous solution thereof, an alkaline earth metal hydroxide or an aqueous solution thereof and an ammonia aqueous solution, or a mixture of one or more thereof.

13. The process according to any one of claims 1 to 12, further comprising, before the first crystallization stage:
- providing the aqueous solution by subjecting a feedstock comprising at least one of Ni and Co, and optionally Mn, to a wet chemical process.

14. The process according to any one of claims 1 to 13, wherein a feedstock for obtaining the aqueous solution results from a mechanical pre-treatment of lithium-ion batteries, and preferably comprises a material derived from recycled lithium ion batteries or lithium ion battery manufacturing scrap.

15. The process according to any one of claims 1 to 14, wherein the process further comprises, preferably before carrying out the first crystallization stage,
- subjecting the aqueous solution to an impurity removal stage, preferably for removal of Al, Cu, Fe and/or Zn from the aqueous solution.

16. The process according to any one of claims 1 to 15, wherein the aqueous solution additionally comprises Li, and the process further comprises a Li recovery stage of isolating Li from a solution which is substantially free of Ni, Co and Mn.

17. Method for the recycling of lithium ion secondary batteries, in particular to produce a positive electrode material for a lithium ion secondary battery, the method comprising a process of any one of claims 1 to 16.
